Europäisches Patentamt

European Patent Office

Office européen des brevets

(19)

(11) Veröffentlichungsnummer: **0 062 900**
**B2**

(12) **NEUE EUROPÄISCHE PATENTSCHRIFT**

(45) Veröffentlichungstag der neuen Patentschrift:
**05.12.90**

(21) Anmeldenummer: **82103007.9**

(22) Anmeldetag: **08.04.82**

(51) Int. Cl.⁵: **C 08 G 12/42, C 08 G 12/38,**
**C 08 L 61/30, C 08 L 97/02,**
**C 09 J 161/24, C 09 J 161/28**

(54) **Verfahren zur Herstellung von Leimharzen.**

(30) Priorität: **15.04.81 DE 3115208**

(43) Veröffentlichungstag der Anmeldung:
**20.10.82 Patentblatt 82/42**

(45) Bekanntmachung des Hinweises auf die
Patenterteilung:
**13.03.85 Patenblatt 85/11**

(45) Bekanntmachung des Hinweises auf die
Entscheidung über den Einspruch:
**05.12.90 Patentblatt 90/49**

(84) Benannte Vertragsstaaten:
**AT BE CH DE FR IT LI NL SE**

(56) Entgegenhaltungen:
**EP-A-0 001 596**      **GB-A- 951 401**
**EP-A-0 062 389**      **JP-A-71 040 418**
**CH-A- 460 332**       **US-A-2 797 206**
**DE-A-1 231 373**      **US-A-2 834 705**
**DE-A-2 224 258**      **US-A-2 849 421**
**FR-A-1 272 327**

**Die Akte enthält technische Angaben, die nach
dem Eingang der Anmeldung eingereicht
wurden und die nicht in dieser Patentschrift
enthalten sind.**

(73) Patentinhaber: **BASF Aktiengesellschaft
Carl-Bosch-Strasse 38
D-6700 Ludwigshafen (DE)**

(72) Erfinder: **Dudeck, Christian, Dr.
Odenwaldring 20
D-6703 Limburgerhof (DE)**
Erfinder: **Weber, Engelbert
Erlenbergstrasse 22
D-6730 Neustadt (DE)**
Erfinder: **Diem, Hans, Dr.
Kniebisstrasse 16
D-6800 Mannheim (DE)**
Erfinder: **Wittmann, Otto
Max-Beckmann-Strasse 13B
D-6710 Frankenthal (DE)**

(56) Entgegenhaltungen:
**SRI Report No. 93, March 1976, "Thermosetting
Resins"**

EP 0 062 900 B2

**Beschreibung**

Es ist bekannt, daß Fomaldehydkondensate des Harnstoffs besonders bei Einwirkung von Feuchtigkeit Formaldehyd abspalten. Wenn man sie als Bindemittel zur Herstellung von Holzwerkstoffen (Leimharze) verwendet, so erhält man Werkstoffe, die während und nach der Herstellung Formaldehyd an die Umgebung abgeben können.

Als Mittel zur Beeinflussung dieser lästigen Eigenschaft wird den Bindemitteln vor der Verarbeitung z.B. fester bzw. freier Harnstoff zugesetzt; man nimmt an, daß es besonders in Gegenwart der natürlichen Holz- bzw. Luftfeuchte zu einer Reaktion des Harnstoffs mit dem freiwerdenden Formaldehyd kommt, d.h. der Harnstoff als Fangsubstanz für den Formaldehyd wirkt.

Man kann auch das Verhältnis von Formaldehyd zu gebundenem Harnstoff (das früher wegen der damit erzielbaren Festigkeit der Verleimung zu etwa 1,6 bis 1,8 (mol/mol) gewählt wurde) herabsetzen, wobei die Neigung der Kondensate, wieder in ihre Ausgangsstoffe zu zerfallen, abnimmt.

Aus der DE—OS 22 62 1977 ist es z.B. bekannt, Harnstoffharze mit einem End-Molverhältnis von 1,4 bis 1,65 kontinuierlich in einem Mehrstufenprozeß herzustellen, bei dem zur Verbesserung der Lagerstabilität und anderer Eigenschaften in einer der Kondensationsstufen eine geringe Menge Methanol zugesetzt und eine bestimmte Reihenfolge von Maßnahmen eingehalten wird.

Der weiteren Verringerung des Formaldehyd-Anteils im Leim sind allerdings Grenzen gesetzt: Besonders die Bindefestigkeit und auch die Lagerstabilität nimmt ab, so daß besonders formaldehydarme Harnstoff-Leime, auch wenn sie nach speziellen Methoden hergestellt werden, vielfach keine ausreichende Lagerstabilität mehr aufweisen. Offensichtlich hat die Lagerstabilität (Haltbarkeit) mit der chemischen Stabilität gegen Formaldehyd-Verlust nichts zu tun.

Außerdem leidet, auch wenn in speziellen Fällen die Haltbarkeit befriedigt, oft die Bindungsfähigkeit des Leimes bzw. Bindefestigkeit der fertigen Verleimung.

Es ist daher eine Aufgabe der Erfindung, ein Verfahren zur Herstellung besonders formaldehydarmer Harnstoffharz-Leime anzugeben, die lagerstabil sind und außerdem eine gute Bindungsfestigkeit erzielen.

Es wurde gefunden, daß man haltbare Harnstoff-Formaldehydleime mit einem Formaldehydanteil von unter 1,4 mol/mol Harnstoff erhält, wenn man den Leimen ein Melamin-Formaldehyd-Kondensat in einer solchen Menge zusetzt, daß bezogen auf den Harnstoffgehalt des Leimes, 0,005 bis 0,2 mol Melamin zugegen ist und durch Zugabe von Alkohol dafür sorgt, daß in untergeordnetem Maße eine Veretherung von Methylolgruppen im Harz stattfindet. Dabei kommt est nicht darauf an, ob das Melaminharz oder das Harnstoffharz oder deren Mischung (teil) verethert wird. Lediglich auf den Verfahrensablauf hat dies einen Einfluß.

Der Zusatz höherer Mengen an Melaminverbindungen als vorstehend angegeben ist zwar technisch nicht sinnlos, jedoch i. a. unwirtschaftlich und bei wesentlich höheren Menge können sich die Härtungszeiten des Leimes verändern. Besonders bewährt hat sich eine Menge von etwa 0,01 bis 0,1 mol Melamin/mol Harnstoff. Unter Berücksichtigung des Molgewichts bedeutet dies einen Gewichtsanteil des Melamins an den Aminoplastbildnern von biz zu etwa 20%.

Melamin-Formaldehyd-Kondensate i. S. der Erfindung sind im wesentlichen die sog. Methylolmelamine, d.h. die ersten Umsetzungsprodukte von Melamin und Formaldehyd in wäßrigalkalischer Lösung. Sie werden in schwach saurer Umgebung verethert, wobei die Verwendung von Ethylenglykol als Alkohol bevorzugt ist. Andere niedermolekulare ein- oder mehrwertige Alkohole wirken ähnlich.

Die Herstellung der Methylolmelamine bzw. ihrer Ether kann in Gegenwart geringer Mengen Harnstoff oder Harnstoff-Formaldehyd-Kondensaten geschehen. Dabei erhöht sich die Reaktionsgeschwindigkeit und es wird auch eine bessere Lagerstabilität beobachtet.

Die Herstellung von Harnstoffharzen mit einem Molverhältnis von unter 1,4 gestaltet sich z.B. wie folgt:

Man kondensiert, ggf. nach einer methylolierenden Vorreaktion, in einer ersten Stufe wäßrigen Formaldehyd oder formaldehydliefernde Verbindungen und Harnstoff im Molverhältnis von 1,8 oder mehr in Gegenwart einer wirksamen Menge von bis 0,3 mol eines ein- oder mehrwertigen Alkohols, bezogen auf den insgesamt vorgesehenen Harnstoff, bei einem pH-Wert unter 6 biz zu einer Viskosität von wenigstens 600 mPas (gemessen bei 20°C an einer Lösung mit einem Kondensatgehalt von 66,5%), unterbricht die Kondensation, engt gegebenenfalls ein und setzt Harnstoff bis zu einem Molverhältnis von weniger als 1,4 zu, wobei i.a. wenigstens eine Teilmenge nach dem Unterbrechen der Kondensation, jedoch vor dem Einengen, zugesetzt wird.

Vorteilhaft weisen die Harnstoffharzleime im gebrauchsfertigen Zustand ein Molverhältnis von Formaldehyd zu Harnstoff von weniger als 1,35, bis zu 1,05 auf.

Dabei liegt schließlich ein Teil des Harnstoffs in freier Form, vor, d.h. die bevorzugt verwendeten Harze stellen eine wäßrige Mischung aus Kondensaten von Harnstoff und Formaldehyd, freiem Harnstoff und gegebenenfalls einer geringen Restmenge an freiem Formaldehyd dar.

Zur Durchführung des Verfahrens geht man in üblicher Weise von wäßrigem Formaldehyd und Harnstoff oder von flüssigen — gewöhnlich harnstoffhaltigen — Formaldehydkonzentraten und Harnstoff aus. Eventuell können auch Paraformaldehyd oder ähnliche Stoffe verwendet werden. Man läßt gewöhnlich unter schwach alkalischen Bedingungen eine Vorreaktion (Methylolierung) ablaufen, sofern nicht das Formaldehydkonzentrat bereites eine entsprechende Struktur mitbringt. Geeignete konzentrierte Formaldehydlösungen, die auch handelsüblich sind, sind z.B. in der DE—OS 24 51 990 oder der DE—PS 22

2

24 258 beschrieben. Auch der in der DE—OS 22 62 197 erwähnte sog. Formurea ist geeignet.

Bei der Vorreaktion fällt der pH-Wert gewöhnlich freiwillig ab und wird nun in einen pH-Bereich von unter 6, bevorzugt pH 4 bis 5 gebracht, worauf die Kondensation einsetzt. Eine ausreichend hohe Temperatur — i.a. 90 bis 110°C — muß eingehalten werden, um ausreichend kurze Reaktionszeiten zu erzielen. Auch ein niedriger pH-Wert verkürzt die Reaktionsdauer.

Die sauren Bedingungen während der Kondensation ermöglichen eine Veretherungsreaktion, so daß der anwesende der Alkohol erfahrungsgemäß in das Harz eingebaut wird.

Die Kondensation wird bis zu begrenzter Wasserverdünnbarkeit forgesetzt und zwar soll ein Kondensationsgrad, der einem Trübungspunkt von 50°C oder weniger (1:5 mit heißem Wasser verdünnte Lösung) bzw. einer Viskosität in der fertigen Leimlösung von 600, besser 700 mPas oder mehr (bei 20°C, Leimlösung) mit 66,5 Gew.-% Trockengehalt) entspricht, eingestellt werden.

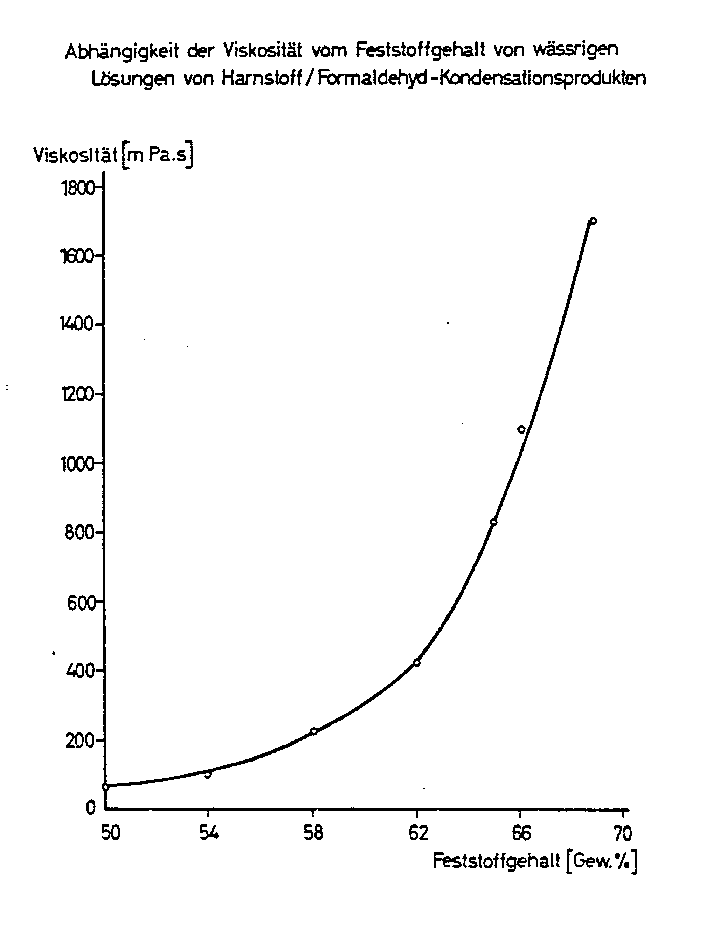

Da die Viskosität von der Konzentration abhängig ist, indem eine stärker verdünnte Lösung eine geringere Mindestviskosität als 600 mPas hat und eine konzentriertere Lösung eine höhere Mindestviskosität kann man die gemessene Abhängigkeit durch eine Kurve darstellen, die in der Figur wiedergegeben ist.

Die Kondensationsreaktion des Harnstoffharzes wird wie gewöhnlich durch Einstellen eines pH-Wertes von 7 bis 8 abgebrochen. Es schließt sich in den meisten Fällen eine Verfahrensgang an, bei dem überschüssiges Wasser bei mäßig erhöhter Temperatur (40 bis 70°C) soweit entzogen wird (sog. Einengen), daß die Kondensate sich eben noch handhaben lassen. Die nach der folgenden Stufe erhaltenen Harze sollen 60 bis 70% Harzsubstanz aufweisen. Bezüglich des Begriffs Harzsubstanz (Trockengehalt) wird auf den weiter unten folgenden Abschnitt verwiesen.

Zur Erzielung eines wie gewünscht niedrigen Molverhältnisses wird dem Kondensat — gegebenenfalls nach dem Einengen — Harnstoff bis zu einem Molverhältnis von weniger als 1,4 zugesetzt. Notwendig ist der Zusatz wengistens einer Teilmenge am Schluß, d.h. nach dem Einengen. Die Maßnahme des Einengens selbst ist nicht entscheidend; falls hiervon Gebrauch gemacht wird — z.B. wenn das Harz transportiert werden soll — setzt man zweckmäßig die gesamte Harnstoffmenge nach dem Einengen zu und kühlt unmittelbar danach bis auf Raumtemperatur ab.

Die Herstellung der erfindungsgemäß zu verwendenden Methylolverbindungen des Melamins ist an sich bekannt; Melamin reagiert mit Formaldehyd in schwach bis stärker alkalischem Bereich in praktisch jedem Molverhältnis bis zu sechs, wobei Polymethylolmelamine gebildet werden, bis zum vollständig umgesetzten Hexamethylolmelamin. Im Gegensatz zu den entsprechenden Harnstoffverbindungen sind diese Methylolverbindungen leicht zu handhaben. Zur Erfindungsgemäßen Verwendung werden sie mit einem ein- oder auch mehrwertigen Alkohol in schwach saurer Umgebung umgesetzt. Bei gleichzeitiger Anwesenheit von Harnstoff oder Harnstoff-Formaldehyd-Kondensaten treten auch harzartige Produkte auf, die jedoch Methylolmelamine in freier oder gebundener Form enthalten. Man kann im Falle des Melamin-Kondensats eine vollständige Veretherung vornehmen, sofern nicht vorgesehen ist, das Harnstoffharz, wie vorne beschrieben, zu verethern. Der Gesamt-Veretherungsgrad des erfindungsgemäßen Harzgemisches sollte etwa 15 bis 50% betragen.

Für die Frage, welches (Teil) Kondensat man in welchem Umfang verethert, ist ersichtlich das praktisch vorgesehene Mengenverhältnis der Kondensate ausreichend. Der Veretherungsgrad kann durch den erfaßbaren Umsatz an Alkohol oder nachträglich analytisch bestimmt werden.

Die erhaltenen Leimharz-Lösungen können in gewohnter Weise verarbeitet werden, d.h. unter Zusatz üblicher Härter, auf üblichen Anlagen (z. B. zur Spannplattenherstellung) und mit üblichen Verarbeitungszeiten. Der Trockengehalt von Leimharzen ist das Gewicht einer unter definierten Bedingungen (Temperatur, Zeit) getrockneten Probenmenge, bezogen auf das ursprüngliche Probengewicht. Da bei der Trockengehaltsbestimmung nicht bis zur Gewichtskonstanz getrocknet wird, handelt es sich um eine konventionelle Methode.

Es wird eine Probenmenge von z.B. etwa 1 g in ein Wägeschälchen eingewogen (dabei ist darauf zu achten, daß die Probenmenge repräsentativ ist; u. U. Probe durch Schütteln oder Umrühren vorher homogenisieren). Der Boden des Wägeschälchens soll mit einer etwa gleichmäßig dicken Schicht des zu trockenenden Produktes bedeckt sein.

Die Probe wird im Trockenschrank entweder bei 120°C während 2 Stunden oder bei 103°C während 15 Stunden getrocknet. Die angegebene Zeit und Temperatur müssen genau eingehalten werden.

Der Trockenschrank gestattet natürliche Durchlüftung auf herausnehmbaren Einlegeböden mit einer offenen Siebfläche von 70%. Zur laufenden Kontrolle der Schranktemperatur ist ein Thermometer durch die Einführungsöffnung zu stecken, dessen Skalenteil außerhalb des Schrankes liegt und dessen Temperaturfühler sich im Nutzraum an der Stelle befindet, an der die Wägegläschen — gleichmäßig verteilt — abgestellt werden. Die Proben dürfen die beheizten Schrankwände nichte berühren. Da durch starke Belegung mit Proben die Temperaturverhältnisse im Schrank gestört werden, sollen je nach Schrankgröße nicht mehr als z.B. 10 Proben auf einmal getrocknet werden. Nach der vorgeschriebenen Trockenzeit werden die Proben in einem mit gekörntem Calciumchlorid versehenen Exsikkator abgekühlt und ausgewogen.

Es werden jeweils 3 Bestimmungen durchgeführt und der arithmetische Mittelwert errechnet.

Herstellungsbeispiel für ein Harz mit einem Molverhältnis von unter 1,4.

1 kg eines handelsüblichen wäßrigen Vorkondensationsproduktes, das 485 g Formaldehyd im Molverhältnis 4:1 an Harnstoff gebunden enthält, wird mit 323 g Harnstoff-Lösung (68 %ig, 70°C heiß) und 131 g Methanol gemischt, mit 25 %iger Natronlauge auf einen pH-Wert von 7,3 eingestellt und unter Rühren auf 90°C erhitzt. Man beläßt das Reaktionsgemisch 10 Minuten bei dieser Temperatur, wobei der pH-Wert sinkt. Anschließend wird mit 20 %iger Ameisensäure ein pH-Wert von 4,5 eingestellt und bei 90 bis 98°C bis zu einem Trübungspunkt von 25°C (1 Teil Reaktionsgemisch verdünnt mit 5 Teilen heißem Wasser) kondensiert. Die Kondensation verläuft in etwa 50 Minuten. Die Viskosität einer Probe beträgt 620 mPas (gemessen bei 20°C).

Nach Erreichen des Trübungspunktes wird die Reaktion durch Zugabe von 25 %iger Natronlauge bis zum pH-Wert 7,5 abgebrochen und es werden 312 g heiße Harnstoff-Lösung zugefügt. Nach Kühlung auf 50°C werden unter vermindertem Durck 370 g Wasser abdestilliert und anschließend nochmals 312 g Harnstofflösung zugefügt. Die so erhaltene Harzlösung wird rasch unter 20°C gekühlt. Sie hat folgende Eigenschaften:

| | |
|---|---|
| Feststoffgehalt: | rd. 66,5% |
| Molverhältnis: | 1,1 : 1 |
| Wasserverträglichkeit (20°C) | 1 : 3,5 |
| Viskosität (20°C): | 708 mPa.s (20°C) |
| pH-Wert: | 8,6 |
| Lagerstabilität bei 20°C: | mind. 3 Monate |
| Gelierzeit bei 50°C: (nach Zusatz von 10% einer 15 %igen NH$_4$Cl-Lösung) | 113 min |
| Dichte 20°C: | 1,277 5 g/cm$^3$ |

Beispiel 1

622 g einer wie vorstehend angegeben hergestellten Leimharzlösung werden mit 46,3 g handelsüblichem Hexamethylolmelaminmethylether vermischt. Aus der modifizierten Leimharzmischung werden Spanplatten hergestellt, die in ihren Eigenschaften verglichen werden mit Spanplatten, die ausschließlich mit dem Harnstoffharz gemäß der vorstehenden Herstellvorschrift unter gleichen Bedingungen gefertigt wurden.

TABELLE 1

| | Leimharz mit Hexamethylolmela-minmethylether | Leimharz ohne Zusatz |
|---|---|---|
| Scherfestigkeit ((N/mm$^2$) | 2,38 | 2,15 |
| Quellung nach 2 Stunden (%) | 23,8 | 26,0 |

Herstellbeispiel für ein harnstoffhaltiges verethertes Melaminkondensat.

6 764 g einer 40 %igen formaldehydlösung (90,2 Mol) und 4 436 g (138,6 Mol) Methanol werden mit 50 %iger Natronlauge auf einen pH-Wert von 7,0 bis 7,2 eingestellt. Man fügt 2 300 g (18,25 Mol) Melamin sowie 950 g (15,83 Mol) Harnstoff hinzu, erwärmt auf 70 bis 90°C und kondensiert nach zugabe von Ameisensäure bei einem pH-Wert von 6,2 bis zu einem Trübungspunkt von 20°C (1 Teil Reaktionsgemisch, verdünnt mit 5 Teilen heißem Wasser). Bei diesem Vorgehen findet nur eine langsame Veretherung statt. Anschließend wird mittels Natronlauge ein pH-Wert von 7,5 eingestellt und überschüssiges Methanol und Wasser abdestilliert. Der dabei erreichte Veretherungsgrad beträgt mehr als 90%, bei einem Feststoffgehalt der Lösung von 57%.

Beispiel 2

596 g der wie vorstehend beschrieben hergestellten Leimharzlösung werden mit 77,3 g (ber. 100%) des vorstehend beschriebenen teilveretherten Melamin/Harnstoff/Formaldehyd-Kondensats versetzt. Mit der Mischung werden Spanplatten hergestellt und verglichen mit Spanplatten, die ausschließlich mit dem Leimharz und unter gleichen Bedingungen gefertigt wurden.

TABELLE 2

| | Leimharz mit Modifizierungs-mittel | Leimharz ohne Zusatz |
|---|---|---|
| Scherfestigkeit ((N/mm$^2$) | 2,51 | 2,15 |
| Quellung nach 2 Stunden (%) | 22,5 | 26,0 |

## Beispiel 3

In zwei getrennten Versuchen werden je 3 000 g eines handelsüblichen wäßrigen Vorkondensationsproduktes, das 1500 g Formaldehyd im Molverhältnis 4 : 1 an Harnstoff gebunden enthält, mit 976 g Harnstofflösung (68 %ig, 70°C) und 384 g Methanol vermischt, mit Natronlauge auf einen pH-Wert von 6,7 eingestellt und unter Rühren auf 90°C erhitzt. Man beläßt das Reaktionsgemisch 10 Minuten bei dieser Temperatur, wobei der pH-Wert sinkt. In dem einem Versuch werden nun 295 g als Lackrohstoff handelsüblicher Pentamethylolmelaminmethylether zugegeben. Anschließend wird jeweils mit 10%iger Ameisensäure ein pH-Wert von 4,6 eingestellt und bei 90 bis 98°C bis zu einem Trübungspunkt von 32°C (1 teil Reaktionsgemisch verdünnt mit 5 Teilen heißem Wasser) kondensiert. Die Kondensation verläuft in etwa 60 Minuten.

Nach Erreichen des Trübungspunktes wird die Reaktion durch Zugabe von 10 %iger Natronlauge bis zum pH-Wert 6,6 abgebrochen und es werden 868 g heiße Harnstofflösung zugefügt. Nach Kühlung auf 50°C werden unter vermindertem Druck 900 g Wasser abdestilliert und anschließend nochmals 1068 g Harnstofflösung zugefügt. Die so erhaltenen Harzlösungen werden rasch unter 20°C gekühlt.

Eigenschaften der Leimharze
Feststoffgehalt:                    66,5%
Viskosität:                    830 mPa.s (20°C)
pH-Wert:                    8,5 (Einstellung mit Natronlauge)
Dichte:                    1,275 g/cm³ (20°C)

Aus der modifizierten und der unveränderten Leimharzmischung werden jeweils Spanplatten hergestellt, die in ihren Eigenschaften verglichen werden.

TABELLE 3

| | Leimharz kondensiert in Gegenwart von Pentamethylol-melaminmethylether | Leimharz ohne Zusatz |
|---|---|---|
| Scherfestigkeit ((N/mm²) | 2,40 | 2,15 |
| Quellung nach 2 Stunden (%) | 23,9 | 26,0 |

## Beispiel 4

Es wird verfahren wie in Beispiel 3, jedoch werden statt anstelle von Pentamethylolmelaminmethylether eine Lösung von 295 g (ber. 100%) des anschließend an Beispiel 1 beschriebenen Melamin/Harnstoff-Formaldehyd-Kondensats zugesetzt.

Es werden Spanplatten hergestellt und in ihren Eigenschaften verglichen.

TABELLE 4

| | Leimharz konden-siert mit Modi-fizierungsmittel aus Beispiel 2 | Leimharz ohne Zusatz |
|---|---|---|
| Scherfestigkeit ((N/mm²) | 2,64 | 2,15 |
| Quellung nach 2 Stunden (%) | 22,4 | 26,0 |

## Beispiel 5

800 g eines handelsüblichen wäßrigen Vorkondensationsproduktes, das 320 g (40 Gew.%) Formaldehyd im Molverhältnis 4 : 1 an Harnstoff gebunden enthält, werden mit 624 g Methanol vermischt und mit Natronlauge auf einen pH-Wert von 6,2 bis 7,5 eingestellt. Man fügt 168 g Melamin hinzu, heizt auf 70 bis 90°C und kondensiert nach Zugabe von Ameisensäure bei einem pH-Wert von 6,25 bis zu einem Trübungspunkt (1 : 5 verdünnt) von 30°C.

Anschließend wird durch Zugabe von Natronlauge ein pH-Wert von 7,5 eingestellt. Die Harzlösung wird mit weiteren 4 780 g des wäßrigen Vorkondensationsproduktes, (entsprechend 1 912 g Formaldehyd), 15 g Methanol sowie 866 g Harnstofflösung (68 %ig, 70°C) versetzt, der pH-Wert auf 6,8 bis 7,2 nachgestellt und unter Rühren auf 90°C erhitzt. Man beläßt 10 Minuten bei dieser Temperatur, wobei der pH-Wert sinkt. Anschließend werden weitere 498 g Harnstofflösung zugegeben, mit 20 %iger Ameisensäure ein pH-Wert von 4,5 eingestellt und bei 90 bis 98°C bis zu einem Trübungspunkt von 51°C (1 : 5 verdünnt mit heißen Wasser) kondensiert. Die Kondensation verläuft in etwa 40 Minuten.

Nach Erreichen des Trübungspunktes wird die Reaktion durch Zugabe von 25 %iger Natronlauge bis zum pH-Wert 8,4 abgebrochen und 1 250 g heiße Harnstofflösung zugefügt. Nach Abkühlung auf 55°C werden unter vermindertem Druck zunächst 670 g Wasser abdestilliert, 1 590 g heiße Harnstofflösung zugefügt und weitere 670 g Wasser abddestilliert. Schließlich wird rasch auf unter 20°C gekühlt.

Eigenschaften des Leimharzes
Feststoffgehalt:                                                    66,5%
Viskosität:                                               839 mPa.s (20°C)
pH-Wert:                                     8,75 (Einstellung mit Natronlauge)
Dichte:                                                 1,271 g/cm³ (20°C)

Aus der modifizierten Leimharzmischung wurden Spanplatten hergestellt, die in ihren Eigenschaften verglichen wurden mit Spansplatten, die ausschließlich mit dem Leimharz ohne Melaminzusatz unter gleichen Bedingungen gefertigt wurden.

TABELLE 5

|  | Leimharz gemäß Beispiel 6 (Ver-etherung mit Methanol) | Vergleich wie vorige Beispiele |
|---|---|---|
| Scherfestigkeit ((N/mm²) | 2,62 | 2,15 |
| Quellung nach 2 h (%) | 22,6 | 26,0 |

Beispiel 6

Man verfährt entsprechend Beispiel 5, jedoch werden statt dort insgesamt 639 g Methanol 866 g Ethylenglykol auf einmal zugegeben.

Aus der modifizierten Leimharzmischung wurden Spanplatten hergestellt, die in ihren Eigenschaften verglichen wurden mit Spanplatten, die ausschließlich mit dem Leimharz gemäß o.e. Herstellvorschrift unter gleichen Bedingungen gefertigt wurden.

TABELLE 6

| Leimharz gemäß | Beispiel 6 (Ver-etherung mit Ethylenglykol) | Vergleich wie vorige Beispiele |
|---|---|---|
| Scherfestigkeit ((N/mm²) | 2,56 | 2,15 |
| Quellung nach 2 h (%) | 23,1 | 26,0 |

Beispiel 7

Harz A

425 g eines wäßrigen Vorkondensationsproduktes, das 189 g Formaldehyd im Molverhältnis 4 : 1 an Harnstoff gebunden enthält, werden mit 835 g Harnstoff-Lösung (68%, 70°C heiß) und 133 g Ethylenglykol, gemischt, mit 25 %iger Natronlauge auf einen pH-Wert 7,0 bis 7,3 eingestellt und unter Rühren auf ca. 80°C erhitzt. Man beläßt das Reaktionsgemisch 10 min bei dieser Temperatur, wobei der pH-Wert sinkt. Danach werden 423 g Harnstoff-lösung (68%, 70°C) zugefügt, sofort mit 10 %iger Ameisensäure ein pH-Wert 4,5 eingestellt und bei 90 bis 98°C bis zu einem Trübungspunkt von 35°C (1 Teil Reaktionsgemisch verdünnt mit 5 Teilen heißem Wasser) kondensiert. Diese Umsetzung verläuft in etwa 60 min.

Nach Erreichen des Trübungspunktes wird die Reaktion durch Zugabe von 25 %iger Natronlauge bis zum pH-Wert 7,0 abgebrochen und es werden weitere 1 056 g Harnstoff-Lösung (68%, 70°C heiß) zugefügt. Die so erhaltene Harzlösung wird unter gleichzeitiger Zudosierung von 1 326 g Harnstoff-Lösung (68%, 70°C heiß) in einen Verdampfer gebracht, unter vermindertem Druck 1 488 g Wasser abdestilliert und rasch auf 20°C gekühlt.

Eigenschaften:

| | |
|---|---|
| Molverhältnis F : H: | 1,1 |
| Viskosität bei 20°C: | 800 bis 1 000 mPa.s |
| Dichte 20°C: | 1,29 bis 1,292 g/cm$^3$ |
| Feststoffgehalt: | 67% |
| Gelierzeit bei 50°C: (nach Zusatz von 10% einer 15 %igen NH$_4$Cl-Lösung) | 60 bis 70 min |
| Lagerstabilität | ca. 8 bis 10 Wochen |

Harz B

141 g eines fertigen, handelsüblichen (65,5 %igen) Harnstoffharzes, das ein Formaldehyd/Harnstoff-Verhältnis von 1,1 besitzt, 464 g 40 %ige Formaldehyd-Lösung und 142 g Wasser werden vorgelegt, mit verdünnter Natronlauge ein pH-Wert von 9,1 eingestellt und 537 g Melamin zugegeben; dabei steigt der pH-Wert auf 9,3.

Der Kesselinhalt wird rasch bis auf Rückflußtemperatur erhitzt und so lange bei dieser Temperatur (103°C) gehalten, bis ein Trübungspunkt von ca. 55°C (1 Teil Reaktionsgemisch verdünnt mit 5 Teilen Wasser) erreicht ist. Während der Kondensation soll der pH-Wert nicht unter 8,7 fallen; nach Erreichen des Trübungspunktes wird sofort auf einen pH-Wert von 10,5 eingestellt und abgekühlt.

Eigenschaften von Harz B

| | |
|---|---|
| Viskosität (20·C) | 150 bis 300 mPa.s |
| pH-Wert | 9 bis 10 |
| Gelierzeit bei 50°C: (nach Zusatz von 10% einer 15 %igen NH$_4$Cl-Lösung) | 25 bis 35 min |
| Lagerstabilität bei 20°C | 4 Wochen |

Harzlösung A und Harzlösung B werden kalt unter Rühren zusammengegeben.

Eigenschaften der Mischung von Harz A und Harz B

| | |
|---|---|
| Viskosität (20°C) | 657 mPa.s |
| pH-Wert | 8 bis 9 |
| Gelierzeit bei 50°C (nach Zusatz von 10% einer 15 %igen NH$_4$Cl—Lsg.) | 170 bis 210 min |
| Lagerstabilität bei 20°C | 4 bis 6 Wochen |

Beispiel 8

Dieser Versuch entspricht Beispiel 7 mit dem Unterschied, daß Harz B während der Zugabe des ersten Teils der Harnstoff-Lösung zu Harz A dosiert wurde.

425 g eines wäßrigen Vorkondensationsproduktes, das 189 g Formaldehyd im Molverhältnis 4 : 1 an Harnstoff gebunden enthält (entsprechend gelichzeitig 945 g Harnstoff), werden mit 835 g Harnstoff-Lösung (68%, 70°C) und 133 g Ethylenglykol gemischt, mit 25 %iger Natronlauge auf einen pH-Wert von 7,0 bis 7,3 eingestellt und unter Rühren auf ca. 80°C gebracht. Man beläßt 10 min bei dieser Temperatur, wobei der pH-Wert sinkt. Danach werden 423 g heiße Harnstoff-Lösung und gleichzeitig 1 285 g Harz B zugesetzt.

Man stellt mit 10 %iger Ameisensäure auf pH 6,6 bis 6,7 ein und hält auf 80°C bis zu einem Trübungspunkt von ca. 15°C (1 Teil Reaktionsprodukt verdünnt mit 5 Teilen heißem Wasser). Die Kondensation verläuft in ca. 30 min. Danach wird die Reaktion durch Zugabe von 25 %iger Natronlauge bis zum pH-Wert 9,0 abgebrochen und es werden 4 056 g heiße Harnstoff-Lösung zugesetzt.

Unter Zufuhr von weiteren 1 326 g heiße Harnstöff-Lösung überführt man in einen Verdampfer und destilliert unter vermindertem Druck 659 g Wasser ab. Die den Verdampfer verlassende Harzlösung wird sofort auf 20°C abgekühlt. Sie hat folgende Eigenschaften:

| | |
|---|---|
| Viskosität (20°C) | 1 500 mPa.s |
| pH-Wert | 8,9 |
| Gelierzeit bei 50°C (nach Zusatz von 10% einer 15 %igen, NH$_4$Cl-Lösung) | 92 min |
| Lagerstabilität | 4 bis 6 Wochen |

**Patentansprüche**

1. Verfahren zur Herstellung von lagerstabilen, wäßrigen Lösungen von Leimharzen auf der Grundlage von Mischungen von Harnstoff-Formaldehyd-Kondensaten mit einem Formaldehydanteil von unter 1,4 mol je mol Harnstoff und untergeordneten Menge von Melamin-Formaldehyd-Kondensaten, dadurch gekennzeichnet, daß man jeweils während der Kondensation unter Zugabe von Alkohol entweder das Harnstoff-Formaldehyd-Kondensat oder das Melamin-Formaldehyd-Kondensat ganz oder teilweise oder deren Mischung teilweise verethert, wobei der Molanteil an Melamin im fertigen Leihmarz, bezogen auf den Molanteil Harnstoff 0,005 bis 0,2 beträgt.

2. Verfahren nach Anspruch 1, dadurch gekennzeichnet, daß der Molanteil an Melamin 0,01 bis 0,1 beträgt.

3. Verfahren nach Anspruch 1, dadurch gekennzeichnet, daß man ein Harnstoff-Formaldehyd-kondensat verethert.

4. Verfahren nach Anspruch 3, derart, daß der Veretherungsgrad 20 bis 60% beträgt.

5. Verwendung der Leimharze gemäß einem der Ansprüche 1 bis 3 zur Herstellung von Spanplatten.

**Revendications**

1. Procédé de préparation de solutions aqueuses stables de colles de résines à base de mélanges de produits de condensation d'urée et de formaldéhyde avec une proportion en aldéhyde formique infériquere à 1,4 mole par mole d'urée et de proportions mineures de produits de condensation de mélamine et de formaldéhyde, caractérisé en ce que, pendant la condensation, on éthérifie partiellement ou complètement, soit le condensat urée-formaldéhyde, soit le condensat mélamine-formaldéhyde, ou un éthérifie partiellement leur mélange, par addition d'alcool, la proportion de la mélamine dans la colle de résine terminée étant de 0,005 à 0,2 mole par mole d'urée.

2. Procédé suivant la revendication 1, caractérisé en ce que la proportion molaire de la mélamine est de 0,01 à 0,1.

3. Procédé suivant la revendication 1, caractérisé en ce que l'on éthérifie le condensat urée-formaldéhyde.

4. Procédé suivant la revendication 3, caractérisé en ce que le degré d'éthérification est de 20 à 60%.

5. Utilisation de colles de résines suivant l'une des revendications 1 à 3 pour la fabrication de panneaux en copeaux de bois.

**Claims**

1. A process for preparing a stable aqueous solution of an adhesive resin based on a mixture of urea-formaldehyde condensate having a formaldehyde content of less than 1.4 moles per mole of urea and an amino amount of a melamine-formaldehyde condensate, which comprises adding an alcohol at the condensation stage to effect complete or partial etherification of the urea-formaldehyde condensate or of the melamine-formaldehyde condensate, or partial etherification of the mixture thereof, the mole fraction of melamine in the ready-prepared adhesive resin being from 0.005 to 0,2, based on the mole fraction of urea.

2. A process as claimed in claim 1, wherein the mole fraction of melamine is from 0.01 to 0.1.

3. A process as claimed in claim 1, wherein the urea-formaldehyde condensate is etherified.

4. A process as claimed in claim 3, wherein the degree of etherification is from 20 to 60%.

5. The use of an adhesive resin obtainable as claimed in any of claims 1 to 3 for the manufacture of chipboard.

Abhängigkeit der Viskosität vom Feststoffgehalt von wässrigen
Lösungen von Harnstoff / Formaldehyd - Kondensationsprodukten